# EUROPEAN PATENT APPLICATION

(11) **EP 4 425 452 A1**
(43) Date of publication of application: **04.09.2024**
(21) Application number: 22887389.9
(22) Date of filing: 30.09.2022
(51) Int. Cl.: G06V 40/10, G06V 10/776, G06V 10/44, G06V 10/46, G06V 10/14

(54) **METHOD FOR TESTING SUITABILITY OF IMAGE FOR TRAINING OR RECOGNIZING NOSE PRINT OF COMPANION ANIMAL**

(30) Priority: 29.10.2021 KR 20210146299
(71) Applicant: Petnow Inc., Daejeon 34014 (KR)
(72) Inventor: LIM, Joon Ho, Seoul 06320 (KR); PAK, Dae Hyun, Seoul 07016 (KR)
(74) Representative: Mammel und Maser Patentanwälte PartG mbB
(86) International application number: PCT/KR2022/014739
(87) International publication number: WO 2023/075185

(57) **Abstract**

Provided are a method and device capable of determining whether an image of a nose print is a frontal image in a process of obtaining the image of the nose print for identification of a companion animal. A method of testing suitability of an image for training or recognizing the nose print of the companion animal includes obtaining an image including a face of the companion animal, extracting a nose region of the companion animal from the image, extracting feature points representing a contour of the nose from the nose region, and determining whether the nose region is frontal based on a positional relationship of the feature points.

## Description

### TECHNICAL FIELD

The present disclosure relates to a method of testing the suitability of an image for training or recognizing a nose print of a companion animal, and more particularly to, a method and device for filtering an image of an object capable of identifying a companion animal, such as a nose print of a dog, by determining whether the image is suitable for artificial intelligence-based machine training or identification.

### BACKGROUND ART

In modern society, the demand for companion animals that live with people and people may rely on emotionally is increasing. Accordingly, the need to manage information about various companion animals in a database is increasing for health care of companion animals. In order to manage companion animals, identification information of companion animals is required, like a human fingerprint, and objects that may be used depending on companion animals may be defined. For example, because dogs have different nose prints (shapes of nose wrinkles), a nose print may be used as the identification information of each dog.

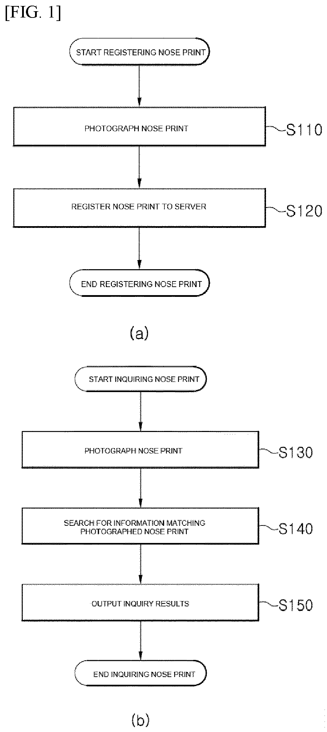

As shown in (a) of FIG. 1, a method of registering a nose print is performed through a process of photographing the face, including the nose, of a companion animal, like registering a person's fingerprint or face (S110), and storing and registering an image including the nose print in a database (server) (S 120). In addition, as shown in (b) of FIG. 1, a method of inquiring a nose print may be performed through a process of photographing the nose print of a companion animal (S130), searching for a nose print matching the photographed nose print and related information (S140), and outputting information matching the photographed nose print (S150). As shown in FIG. 1, each companion animal may be identified and information of the corresponding companion animal may be managed through the process of registering and inquiring the nose print of the companion animal. The nose print information of the companion animal may be stored in a database and may be used as data for artificial intelligence (AI)-based training or recognition.

However, there are several problems in obtaining and storing a nose print of a companion animal.

First, it may be difficult to recognize photos according to a photographing angle, focus, distance, size, environment, etc. There have been attempts to apply human face recognition technology to nose print recognition, but while sufficient data of human face information has been accumulated, there is a problem in that a recognition rate is low due to insufficient data of nose print information of companion animals. Specifically, in order to perform AI-based recognition, training data processed into a form that machine may be trained is required, but it is difficult to recognize nose prints of companion animals because sufficient data of nose prints is not accumulated.

In addition, in order to recognize nose prints of companion animals, an image with clear nose wrinkles is required, but unlike humans, because companion animals do not know actions such as pausing a moment, it is not easy to obtain the image with clear nose wrinkles. In particular, for training or identifying nose prints, an image of the frontal nose is desirable if possible, but when a companion animal such as a dog moves, the frontal image may not be captured. In the case of images that are not frontal, it may be desirable to discard the images because the images are unsuitable for training or recognizing nose prints.

### DISCLOSURE

### Technical Problem

The present disclosure provides a method and device capable of determining whether an image of a nose print is a frontal image in a process of obtaining the image of the nose print for identification of a companion animal.

The problems to be solved by the present disclosure are not limited to those mentioned above, and other problems not mentioned will be clearly understood by ordinary skilled in the art from the description below.

### Technical Solution

According to the present disclosure, a method of testing suitability of an image for training or recognizing a nose print of a companion animal includes obtaining an image including a face of the companion animal, extracting a nose region of the companion animal from the image, extracting feature points representing a contour of the nose from the nose region, and determining whether the nose region is frontal based on a positional relationship of the feature points.

The extracting of the feature points may include deriving a feature vector indicating sensitivity to each of kernels corresponding to a predefined pattern type for each pixel of the image by applying each of kernels to the image, and extracting the feature points representing the contour of the nose from the feature vector.

The method may further include correcting a connection relationship and positions of the feature points by comparing a skeleton model generated by connecting the feature points with a nose model of the companion animal

The determining of whether the nose region is frontal may include forming a vertical axis line connecting feature points representing a top and a bottom of the nose, and determining whether the face rotates in a yaw direction by comparing a distance between a feature point representing a left end of the nose and the vertical axis line with a distance between a feature point representing a right end of the nose and the vertical axis line.

The determining of whether the nose region is frontal may include forming a horizontal axis line connecting feature points representing a left end and a right end of the nose, and determining whether the face rotates in a pitch direction based on whether a vector representing a directionality of feature points constituting nostril openings of the companion animal is located within a reference range with respect to the horizontal axis.

The determining of whether the nose region is frontal may include determining whether the face rotates in a pitch direction based on positions of feature points corresponding to nostril topmost ends of the companion animal and positions of feature points corresponding to nostril bottommost ends of the companion animal with respect to positions of feature points corresponding to openings of the nose.

The determining of whether the nose region is frontal may include determining whether the face has been rotated by comparing an area of a left nostril of the companion animal obtained by connecting feature points constituting the left nostril with an area of a right nostril of the companion animal obtained by connecting feature points constituting the right nostril.

The determining of whether the nose region is frontal may include forming a vertical axis line connecting feature points representing a top and a bottom of the nose, and determining whether the face has been rotated by comparing a distance between a feature point representing a medial end of a left nostril of the companion animal and the vertical axis line with a distance between a feature point representing a medial end of a right nostril of the companion animal and the vertical axis line.

The determining of whether the nose region is frontal may include forming a vertical axis line connecting the feature points representing a top and a bottom of the nose among the feature points, and determining that the face of the companion animal is not frontal when the vertical axis line and a nostril region of the companion animal overlap each other.

The method may further include determining that the image including the face of the companion animal is invalid when it is determined that the face of the companion animal is not frontal and discarding the image, and testing validity of an image of a next frame.

According to the present disclosure, a device for testing suitability of an image for training or recognizing a nose print of a companion animal includes a camera configured to photograph the companion animal and generate an image including a face of the companion animal, and a processor configured to process the image to test the suitability of the image. The processor may extract a nose region of the companion animal from the image, extract feature points representing a contour of the nose from the nose region, and determine whether the nose region is frontal based on a positional relationship of the feature points.

The processor may derive a feature vector indicating sensitivity to each of kernels corresponding to a predefined pattern type for each pixel of the image by applying each of kernels to the image, and extract the feature points representing the contour of the nose from the feature vector.

The processor may correct a connection relationship and positions of the feature points by comparing a skeleton model generated by connecting the feature points with a nose model of the companion animal.

The processor may form a vertical axis line connecting feature points representing a top and a bottom of the nose, and determine whether the face rotates in a yaw direction by comparing a distance between a feature point representing a left end of the nose and the vertical axis line with a distance between a feature point representing a right end of the nose and the vertical axis line.

The processor may form a horizontal axis line connecting feature points representing a left end and a right end of the nose, and determine whether the face rotates in a pitch direction based on whether a vector representing a directionality of feature points constituting nostril openings of the companion animal is located within a reference range with respect to the horizontal axis.

The processor may determine whether the face rotates in a pitch direction based on positions of feature points corresponding to nostril topmost ends of the companion animal and positions of feature points corresponding to nostril bottommost ends of the companion animal with respect to positions of feature points corresponding to openings of the nose.

The processor may determine whether the face has been rotated by comparing an area of a left nostril of the companion animal obtained by connecting feature points constituting the left nostril with an area of a right nostril of the companion animal obtained by connecting feature points constituting the right nostril.

The processor may form a vertical axis line connecting feature points representing a top and a bottom of the nose, and determine whether the face has been rotated by comparing a distance between a feature point representing a medial end of a left nostril of the companion animal and the vertical axis line with a distance between a feature point representing a medial end of a right nostril of the companion animal and the vertical axis line.

The processor may form a vertical axis line connecting the feature points representing a top and a bottom of the nose among the feature points, and determine that the face of the companion animal is not frontal when the vertical axis line and a nostril region of the companion animal overlap each other.

The processor may determine that the image including the face of the companion animal is invalid when it is determined that the face of the companion animal is not frontal, discard the image, and test validity of an image of a next frame.

### Advantageous Effects

According to the present disclosure, an image of a nose print that is not frontal may be filtered by extracting feature points representing the contour of the nose and determining whether the face has been rotated based on the positional relationship of the feature points.

The effects of the present disclosure are not limited to those mentioned above, and other effects not mentioned will be clearly understood by ordinary skilled in the art from the description below.

### DESCRIPTION OF DRAWINGS

FIG. 1 shows a schematic procedure for the care of a companion animal.
FIG. 2 shows a procedure for managing a nose print of a companion animal to which determination of the suitability of an object image is applied according to the present disclosure.
FIG. 3 is a flowchart of a method of testing the suitability of an image for training or recognizing a nose print of a companion animal.
FIG. 4 shows an example of a direction of rotation of the face.
FIG. 5 shows an example of feature points representing the contour of the nose in an image of a nose print according to the present disclosure.
FIGS. 6 and 7 show a kernel for extracting Haar-like features from an image of a nose print and an example of applying the kernel.
FIG. 8 shows an example of a process of testing and correcting positions of feature points by comparing a skeleton model and a nose model.
FIGS. 9 to 14 show examples of determining whether the nose rotates and a degree of rotation by using position information of feature points representing the contour of the nose.
FIG. 15 is a block diagram of a device for testing the suitability of an image for training or recognizing a nose print of a companion animal.

### MODE FOR INVENTION

Hereinafter, with reference to the accompanied drawings, embodiments of the present disclosure will be described in detail so that those skilled in the art may easily practice the present disclosure. The present disclosure may be implemented in many different forms and is not limited to the embodiments described herein.

In order to clearly explain the present disclosure, parts that are not relevant to the description are omitted, and identical or similar components are assigned the same reference numerals throughout the specification.

In addition, in various embodiments, components having the same configuration will be described using the same reference numerals only in the representative embodiment, and in other embodiments, only components that are different from those of the representative embodiment will be described.

Throughout the specification, when a part is "connected (or coupled)" to another part, this includes not only "directly connected (or coupled)" but also "indirectly connected (or coupled)" with another member therebetween. In addition, when a part "includes" a component, this means that the part may further include other components, rather than excluding other components, unless otherwise stated.

Unless otherwise defined, all terms used herein, including technical or scientific terms, have the same meaning as commonly understood by ordinary skilled in the technical field to which the present disclosure pertains. Terms defined in commonly used dictionaries should be interpreted as having a meaning consistent with the meaning in the context of the relevant technology, and unless explicitly defined in the present application, should not be interpreted in an ideal or excessively formal sense.

The present document mainly describes extracting identification information by using the shape of dog's nose wrinkles (a nose print), but the scope of companion animals in the present disclosure is not limited to dogs, and features used as the identification information are not limited to the nose print, and may use various physical features of companion animals.

As described above, images of nose prints of companion animals suitable for artificial intelligence (AI)-based training or identification are insufficient, and are likely to be of low quality, and thus, it is necessary to selectively store images of nose prints in a database for AI-based training or identification. In particular, the present disclosure provides a filtering method such that only frontal images of nose prints may be used for training.

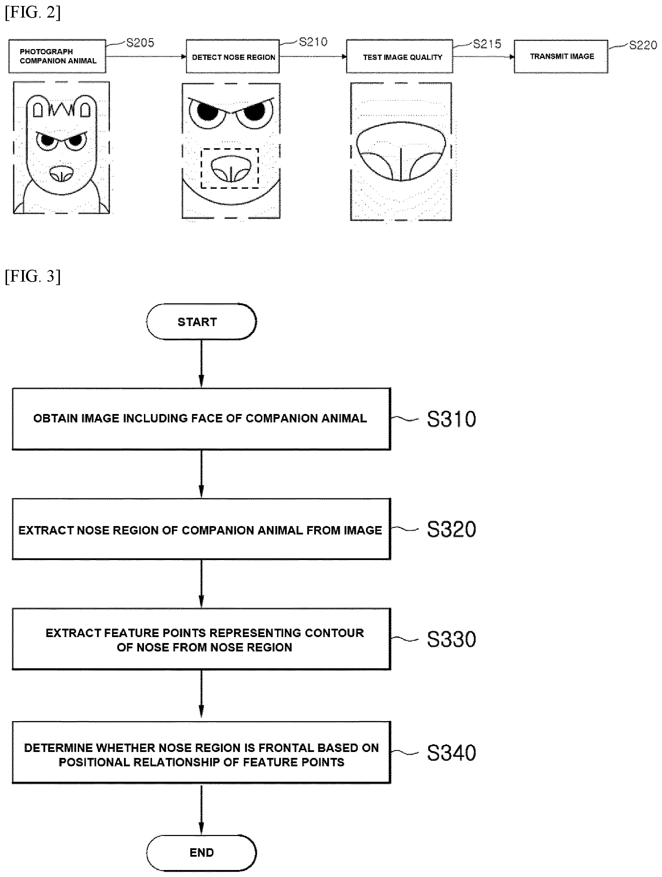

FIG. 2 shows a procedure for managing a nose print of a companion animal to which determination of the suitability of an object image is applied according to the present disclosure. In the present disclosure, the nose print of the companion animal is photographed, it is first determined whether a photographed image of the nose print is suitable as data for training or identification, when it is determined that the photographed image of the nose print is suitable, the photographed image of the nose print is transmitted to a server for recognition and stored, and then used as the data for training or identification.

The nose print management procedure according to the present disclosure largely includes a nose print acquisition procedure and a nose print recognition procedure.

According to the present disclosure, when registering a new nose print of a companion animal, an image including the companion animal is captured, and then an image of the nose print is extracted from a face region of the companion animal. In particular, it is first determined whether the corresponding image of the nose print is suitable for identification or training the corresponding companion animal. When it is determined that the captured image is suitable for identification or training, the corresponding image is transmitted to a server (an AI neural network) and stored in the database.

When inquiring identification information of a companion animal through a nose print, similarly, a video including the companion animal is photographed and then an image of a nose print is extracted from a face region of the companion animal. In particular, it is first determined whether the corresponding image of the nose print is suitable for identification or training of the corresponding companion animal. When it is determined that the captured image is suitable for identification or training, the corresponding image is transmitted to the server, and the identification information of the corresponding companion animal is extracted through matching with previously stored images of nose prints.

In the case of the nose print registration procedure, as shown in FIG. 2, a companion animal is photographed (S205), a nose region is first detected in the captured image of the companion animal (S210), a suitable image of a nose print is output through a quality test of whether the captured image is suitable for training or identification (S215), and the output image is transmitted to the server that constitutes the AI network to be stored and registered (S220).

FIG. 3 is a flowchart of a method of testing the suitability of an image for training or recognizing a nose print of a companion animal.

The method of testing the suitability of the image for training or recognizing the nose print of the companion animal according to the present disclosure includes obtaining an image including the face of the companion animal (S310), extracting a nose region of the companion animal from the image (S320), extracting feature points representing the contour of the nose from the nose region (S330), and determining whether the nose region is frontal based on the positional relationship of the feature points (S340).

According to the present disclosure, an image of the nose print that is not frontal may be filtered, by extracting feature points representing the contour of the nose and determining whether the face has been rotated based on the positional relationship of the feature points. When it is determined that the image of the nose print is not a frontal photo, the image in the corresponding frame is not be used for training or identification. A quality test of the image of the nose print according to the present disclosure is independently performed for each frame of a certain unit, and when an image of the nose print having a suitable quality is detected, the corresponding image is transmitted to a neural network server and used for training or identification of the corresponding companion animal.

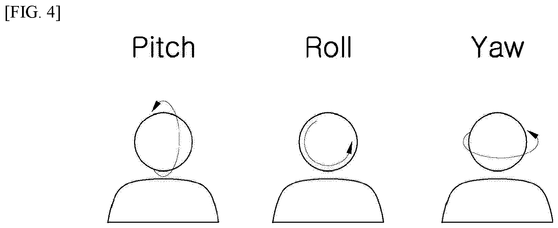

FIG. 4 shows an example of a direction of rotation of the face. As shown in FIG. 4, rotation of a three-dimensional (3D) object may be expressed in pitch, roll, and yaw directions. Whether the nose of a 3D companion animal is facing the front may be tested by determining whether the amount of rotation of the nose in the pitch and yaw directions shown in FIG. 4 is within an acceptable range. In the case of rotation in the roll direction, when a roll rotation is detected, the frontal image of a nose print may be obtained by rotating the corresponding image in the opposite direction of the roll rotation. Therefore, in the present document, methods of detecting rotation in the pitch and yaw directions are mainly explained. According to the present disclosure, in order to determine a rotation of the nose in a captured two-dimensional (2D) image, the direction and amount of rotation of the nose may be tested by using the feature that the nose of the companion animal is left-right symmetrical.

Therefore, the present disclosure first defines feature points that form the contour of the nose, and determines whether the nose is rotated, the direction of rotation, and the amount of rotation from the positional relationship of each feature point, thereby determining whether the image of the nose print is a frontal image. The feature points that form the contour of the nose may include the top, bottom, left end, and right end of the nose, and may also include the top, bottom, left end, and right end of the nostrils.

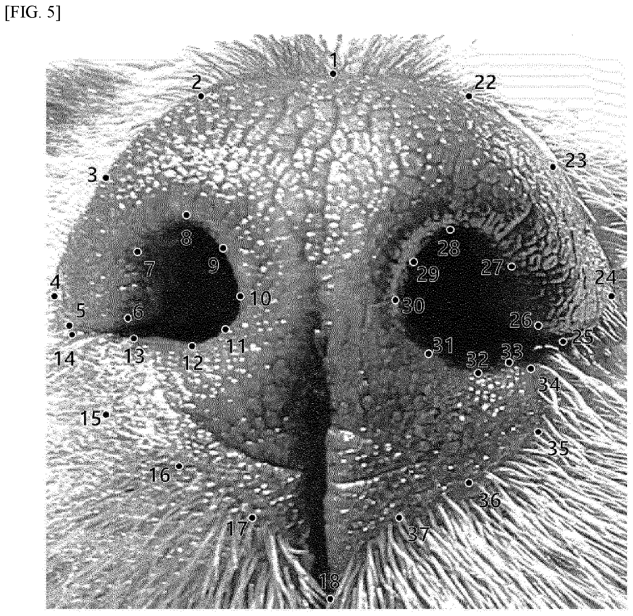

For example, as shown in FIG. 5, 34 feature points may be defined with respect to the image of the nose print, and each feature point number may be set as follows.
- Top of the nose: 1, bottom of the nose: 18, left end of the nose: 4, right end of the nose: 24
- Top of left nostril: 8, bottom of left nostril: 12, medial end of left nostril: 10, left nostril openings: 5 to 6, 13 to 14
- Top of right nostril: 28, bottom of right nostril: 32, medial end of right nostril: 30, right nostril openings: 25 to 26, 33 to 34

In addition to the above feature point numbers, feature points may be set symmetrically left and right with respect to a vertical center line of the nose, as shown in FIG. 5. According to the positional relationship of the feature points, a direction in which the nose is facing (e.g., left and right) may be determined.

Before explaining the method of determining whether the face rotates based on the positional relationship of each feature point, a process of extracting the feature points from the image of the nose print is described.

According to the present disclosure, operation S330 of extracting the feature points includes applying each of kernels corresponding to a predefined pattern type to an image, deriving a feature vector indicating sensitivity to each kernel for each pixel of the image by applying the kernels, and extracting the feature points representing the contour of the nose from the feature vector.

As the method of extracting feature points from the image of the nose print of the companion animal, a Haar-like feature extraction technique, a Histogram-of-Gradient (HoG) feature extraction technique, etc. may be used. After extracting local features by using Haar-like features or HoG features, feature points may be extracted through principal component analysis or various machine training.

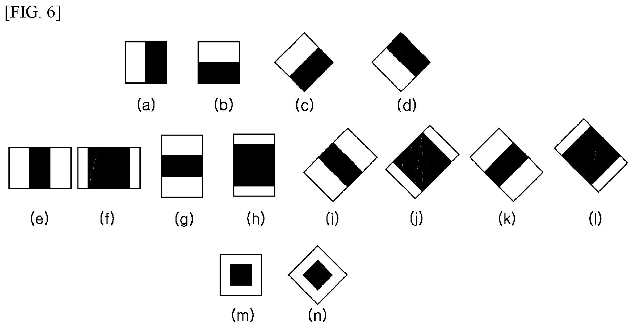

For example, in the case of Haar-like features, it is a feature extraction method specialized for extracting edges, straight lines, etc. As shown in FIG. 6, Haar-like kernels of various shapes may be defined. For example, the Haar-like kernel may be defined as a kernel that extracts edge features, as shown in FIG. 6. In FIG. 6, (a), (b), (c), and (d) are kernels that are sensitive to edges located within the corresponding region, (e), (f), (g), ( h), (i), (j), (k), and (l) are kernels that are sensitive to straight lines located within the corresponding region, and (m) and (n) kernels that are sensitive to objects located at the center of the corresponding region. For example, (a) is the kernel that is sensitive to an edge in a vertical direction, (b) is the kernel that is sensitive to an edge in a horizontal direction, and (e) is the kernel that is sensitive to a thin straight line.

FIG. 6 illustrates 14 Haar-like kernels as an example, but countless kernels may be defined according to their sizes, shapes, directions, etc. The feature vector with respect to each pixel of the image may be extracted, by performing a convolution operation on each kernel corresponding to the predefined pattern type and an input image. The feature vector indicates how sensitive each Haar-like kernel was to each pixel position of each image.

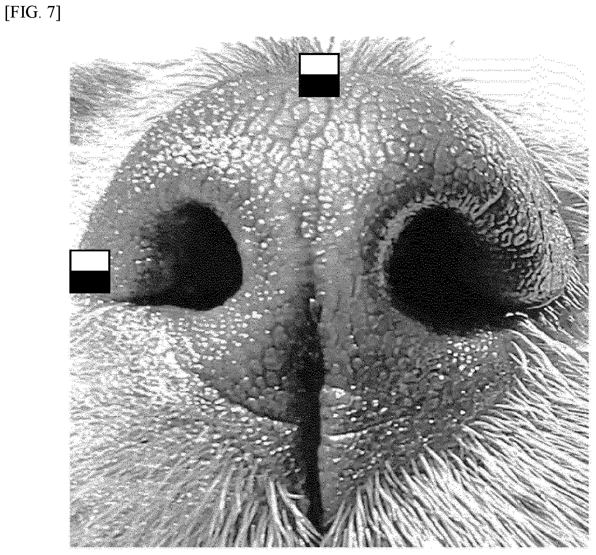

For example, referring to FIG. 7, a feature point indicating the uppermost position of the nose has an edge component in the shape of a horizontal line in many cases. Accordingly, the feature point shows a high correlation with the kernel (a) of FIG. 6, and a convolution value increases. On the other hand, a feature point indicating the left side of the nose has an edge component in the shape of a vertical line in many cases. Accordingly, the feature point shows a low correlation with the kernel (a) of FIG. 6, and the convolution value decreases.

According to this principle, feature information is extracted by using n kernels for each pixel of the image while changing the size of the image. In this way, feature information may be extracted for each feature point, and feature information obtained from a large number of images may be trained by using principal component analysis, a machine training method, or a method using a neural network.

While the Haar-like features are extracted based on edge information, the HoG feature extraction method divides the image into pieces of a certain size, determines directionality information within each piece, and converts the directionality information into numbers to extract feature information of each piece. The feature information may be extracted by using other image processing methods.

The present disclosure may be used by combining various feature extraction methods in addition to the Haar-like features and the HoG features described above. Feature information extracted from each pixel may be integrated and defined as a feature vector. From the feature vector extracted above, a model of the image of the nose print may be trained through principal component analysis or various machine training methods. In order to find feature points in a newly input image, the feature points may be found by extracting a feature vector for each pixel by using the feature extractor described above, and selecting a pixel with the highest probability using the training model described above.

Using this method, each feature point may be found independently. However, a plurality of feature points defined above have a locational correlation. For example, the topmost (number 1) feature point is located higher on a vertical axis than other feature points, and feature points representing the nostrils should be located inside the feature point representing the outer corner of the nose. In order to use the positional correlation, a detection method using the relative positional relationship between feature points may be proposed.

According to the present disclosure, operation S330 of extracting the feature points may further include correcting the connection relationship and positions of the feature points by comparing a skeleton model generated by connecting the feature points with a nose model of the companion animal.

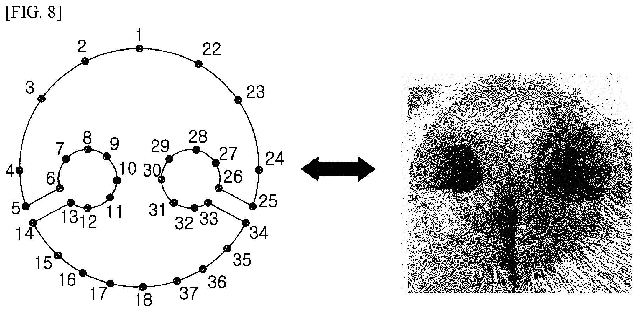

For example, as shown on the left side of FIG. 8, the skeleton model may be generated by forming straight lines connecting feature points in order. It may be assumed that the skeletal model is located on the contour of the nose, and the model may be fit to the shape of the nose by moving each feature point in a normal direction of the skeletal model. In order for this process to be performed successfully, it is necessary to set an initial position of each feature point, which may be defined by using the individual feature point detection method described above.

In addition, through this process, it may be checked whether individual feature points have been correctly detected, for example, whether feature points of nostril openings are crossed and twisted, and, if necessary, a position of an incorrectly detected feature point may be corrected by performing a process of exchanging positions between feature points or fitting feature points to the contour of the nose. In addition, even though a feature point is missing due to failure to detect some feature points, a position of the missing feature point may be estimated from positions of adjacent feature points by using the skeleton model.

Through this process, the feature point information of the nose of the companion animal may be efficiently extracted, and the positional relationship and the geometric correlation of the feature points may be used to determine whether the nose is facing the front or whether rotation of pitch/roll/yaw axis has occurred.

As described above, after extracting the feature points representing the contour of the nose from the image of the nose print, it may be determined whether the image of the companion animal is a frontal image by analyzing the positional relationship of each feature point. Hereinafter, a method of determining whether the face rotates through the feature points of the image of the nose print is described.

According to the present disclosure, operation S340 of determining whether the nose region is frontal based on the positional relationship of the feature points includes forming a vertical axis line 1-18 connecting feature points representing the top and bottom of the nose, and determining whether the face rotates in the yaw direction by comparing distances between feature points 4 and 24 that are symmetrical to each other among the feature points and the vertical axis line 1-18.

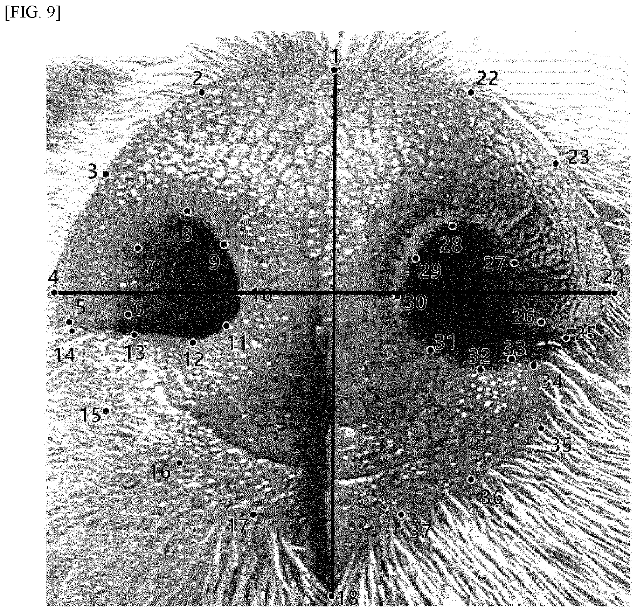

As shown in FIG. 9, the relative positions of left and right corresponding points may be measured by using a line (vertical axis line) connecting the top 1 and the bottom 18 of the entire nose region and a line (horizontal axis line) connecting the left end 4 and the right end 24 of the entire nose region as a reference line. Through this, the similarity between the left and right of the vertical axis line may be measured, and it is possible to predict which direction the nose has rotated, whether the nose rotates in the yaw direction, and a degree of rotation based on the vertical axis line.

For example, in FIG. 9, the line connecting 1 and 18 and the line connecting 4 and 24 respectively mean the vertical axis and the horizontal axis of the nose. When photographed in a forward direction, a distance from 4 to the vertical axis and a distance from 24 to the vertical axis may be similar to each other due to symmetry. It is possible to easily predict the degree of rotation in the yaw direction, by measuring distances between pairs of corresponding points and calculating a difference value between the distances.

In addition, according to the present disclosure, operation S340 of determining whether the face has been rotated includes forming a horizontal axis line 4-24 connecting feature points representing the left end 4 and the right end 24 of the nose, and determining whether the face rotates in the pitch direction based on whether a vector representing the directionality of the feature points constituting the nostril openings of the companion animal is located within a reference range with respect to the horizontal axis.

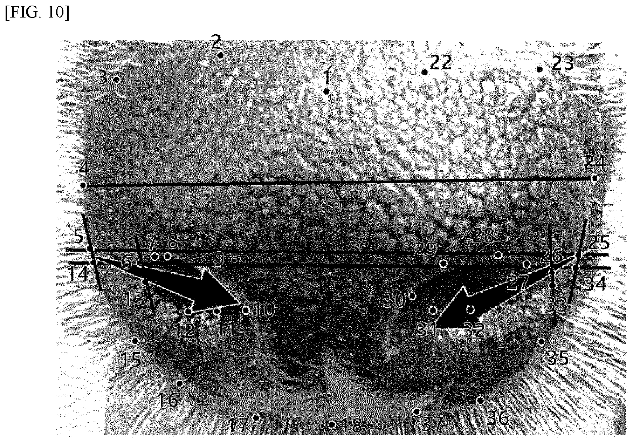

According to the present disclosure, it is possible to determine whether the nose is facing upward or downward by determining directionality information of nostril openings 6-5-14-13 and 26-25-34-33. As shown in FIG. 10, the directionality of the nostril opening may be defined as a vector based on four points of the nostril opening. For example, when the opening vector is within a reference value range based on the horizontal axis, the pitch direction of the nose may be determined as the front, when the opening vector is in a range higher than the reference value range, the pitch direction of the nose may be determined as an upward direction, and when the opening vector is in a range lower than the reference value range, the pitch direction of the nose may be determined as a downward direction.

In addition, according to the present disclosure, operation S340 of determining whether the face has been rotated includes determining whether the face rotates in the pitch direction based on positions of the feature points 8 and 28 corresponding to the nostril topmost ends of the companion animal and positions of the feature points 12 and 32 corresponding to the nostril bottommost ends of the companion animal with respect to positions of the feature points 6-5-14-13 and 26-25-34-33 corresponding to the openings of the nose.

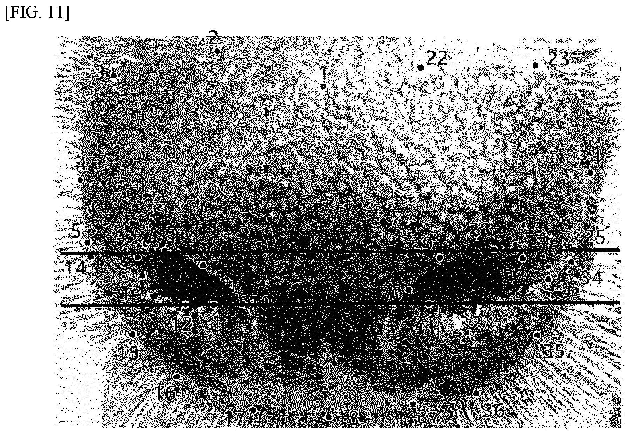

According to the present disclosure, it is possible to easily predict the pitch direction that the nose is currently facing by using the topmost/bottommost feature points (respectively 8 and 12, 28 and 32) of the nostrils and the relative height information of the openings. As shown in FIG. 9, when the nose is facing the front, the positions of the nostril uppermost ends 8 and 28 indicate upward compared to the positions of the openings 6-5-14-13 and 26-25-34-33, and the positions of the nostril uppermost ends 12 and 32 appear at similar heights to the openings 6-5-14-13 and 26-25-34-33. On the other hand, when the nose is facing in the downward direction as shown in FIG. 11, there is a feature such as that the positions of the uppermost ends and the positions of the openings appear similar. Therefore, using the relative height information, it is possible to easily determine whether the face rotates in the pitch direction.

According to the present disclosure, operation S340 of determining whether the nose region is frontal based on the positional relationship of the feature points includes determining whether the face has been rotated by comparing an area of the left nostril of the companion animal obtained by connecting the feature points constituting the left nostril with an area of the right nostril of the companion animal obtained by connecting the feature points constituting the right nostril.

According to the present embodiment, the directionality of the nose may be determined by dividing the nose region by using a polygon connecting feature points and measuring the area of the nose region. In an ideal situation, when the left and right of the nose are symmetrical, it may be assumed that areas of the left and right divided regions are also similar, and as the nose rotates, a size difference between the left and right divided areas increases. This method is less affected by the pitch rotation, and thus, it may be useful when rotation occurs simultaneously in the pitch and yaw directions.

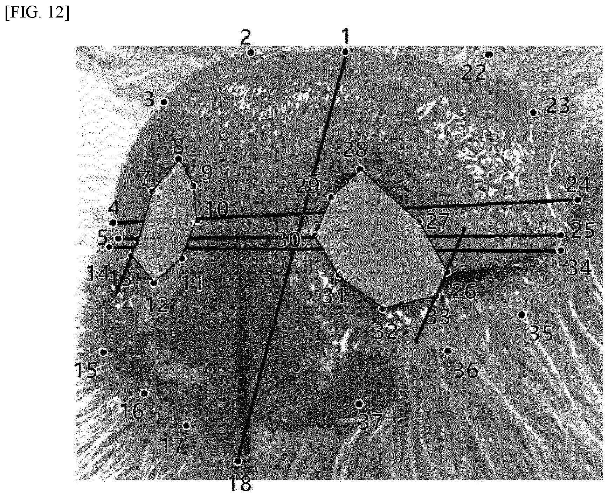

For example, an area ratio of the nostrils as shown in FIG. 12 may be used to determine the yaw direction while being less affected by an angle change in the pitch direction. In FIG. 12, the nose is rotated upward (pitch) and rotated to the left (yaw). Because the vertical axis (the line connecting numbers 1 and 18) is outside the center of the nose, it may be difficult to determine the yaw rotation by using a method using the corresponding point symmetry. However, upon confirming the area of the nostril, because the area of the right nostril is clearly measured to be large, it may be confirmed that the yaw rotation has occurred in the corresponding image.

According to the present disclosure, operation S340 of determining whether the nose region is frontal based on the positional relationship of the feature points includes forming a vertical axis line connecting feature points representing the top and bottom of the nose, and determining whether the face has been rotated by comparing a distance between the feature point representing the medial end of the left nostril of the companion animal and the vertical axis line with a distance between the feature point representing the medial end of the right nostril of the companion animal and the vertical axis line.

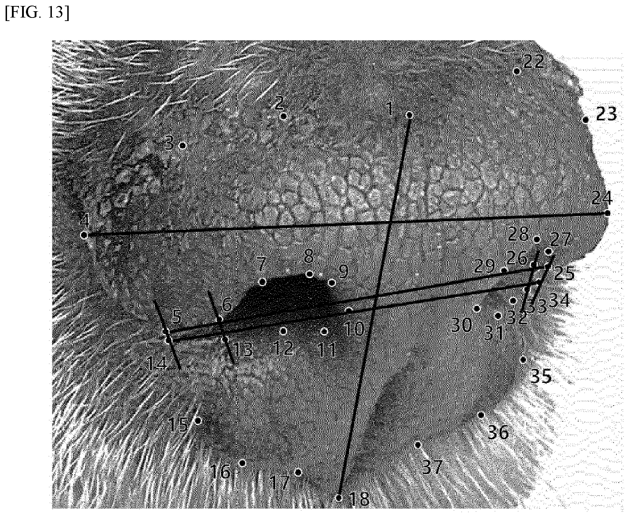

According to the present embodiment, the yaw directionality may be determined by using the shortest distance ratio of the vertical axis line (a straight line connecting numbers 1 and 18) and the nostril. In an ideal situation, when the nose is facing the front and is left-right symmetrical, the distance from the medial end feature point 10 of the left nostril to the vertical axis line 1-18 and the distance from the medial end feature point 30 of the right nostril to the vertical axis in FIG. 13 may be similar.

In the case of the left end and right end of the entire nose region described above, some inaccurate results may occur as the pitch and yaw rotation occur simultaneously. However, empirically, the distances between the vertical axis line 1-18 and the medial nostril feature points 10 and 30 are less affected by the pitch and more affected by the yaw rotation. Therefore, a degree of the yaw rotation may be estimated by measuring the distances from the vertical axis line 1-18 to the medial ends (number 10 on the left and number 30 on the right) of the right nostril as shown in FIG. 13. When the nose is rotated significantly in the pitch and yaw directions, one nostril is located closer to the vertical axis line 1-18 than the other nostril. Thus, when a distance difference between the two medial ends exceeds a certain value, it may be assumed that the yaw rotation has occurred.

According to the present disclosure, operation S340 of determining whether the face has been rotated includes forming a vertical axis line connecting the feature points representing the top and bottom of the nose among the feature points, and determining that the face of the companion animal is not frontal when the vertical axis line and the nostril region of the companion animal overlap.

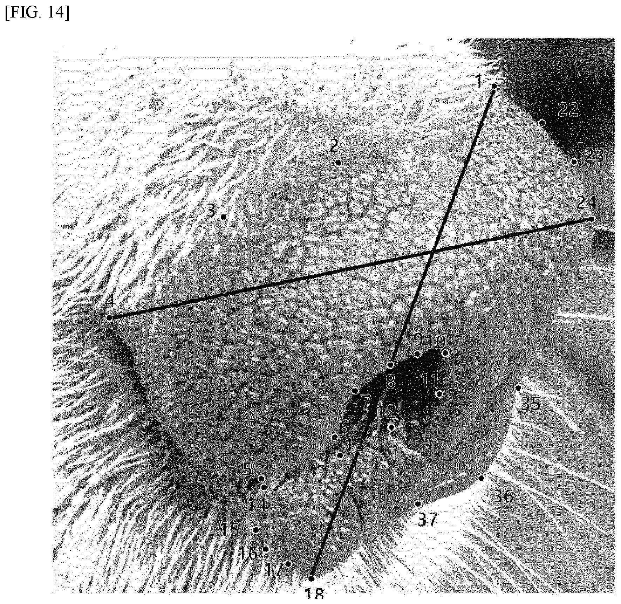

As shown in FIG. 14, there may be a case where the nose rotates greatly and one nostril is not visible at all. Because it is difficult to use such photos for nose print recognition as they are, the photos need to be separately classified and processed. When the nose rotates so badly that one nostril is not visible, feature point detection fails or a feature point position that may not occur naturally is detected. For example, in the case of FIG. 14, the vertical axis line 1-18 of the nose overlaps the nostril region, and the feature points 25 to 34 corresponding to one nostril are not detected. It may be determined that the nose was photographed in a shape other than a frontal symmetry, by determining such an abnormal arrangement of feature points.

In addition, the method of testing the suitability of the image for training or recognizing the nose print of the companion animal according to the present disclosure further includes determining that the image including the face of the companion animal is invalid when it is determined that the face of the companion animal is not frontal and discarding the corresponding image.

In addition to the method described above, various methods may be used to determine whether the image of the nose print is an image of the front of the companion animal by using the positional relationship of feature points.

According to the present disclosure, the image of the nose print that is not frontal may be filtered, by extracting the feature points representing the contour of the nose and determining whether the face has been rotated based on the positional relationship of the feature points. When it is determined that the image of the nose print is not a frontal photo, the image of the corresponding frame is not used to train the nose print of the companion animal or identify the companion animal. According to the present disclosure, whether the nose print is frontal may be determined individually with respect to a plurality of frame images, and, as a result of testing a specific frame, when the image of the nose print is a frontal image, training or recognition of the nose print may be performed by using the corresponding image.

The image of the nose print described in the present document may be tested by an electronic device such as a smartphone or a tablet. Hereinafter, a device and an operation for testing the suitability of the image for training or recognizing the nose print of the companion animal according to the present disclosure are described. Whether the image of the nose print is frontal (suitability) described above may be tested by a device such as a smartphone or a tablet in which a program or an application for recognition of the nose print of the companion animal.

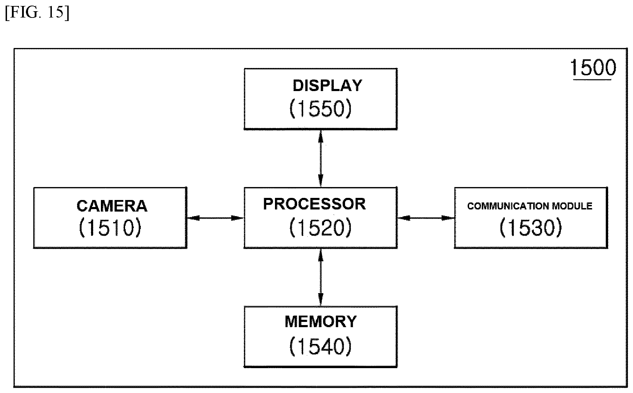

FIG. 15 is a block diagram of a device for testing the suitability of an image for training or recognizing a nose print of a companion animal. A device 1500 for testing the suitability of the image for training or recognizing the nose print of the companion animal according to the present disclosure includes a camera 1510 that photographs the companion animal and generates the image including the face of the companion animal, and a processor 1520 that processes the image and tests the suitability of the image. The processor 1520 extracts a nose region of the companion animal from the image, extracts feature points representing the contour of the nose from the nose region, and determines whether the nose region is frontal based on the positional relationship of the feature points.

The camera 1510 may include an optical module such as a lens and a charge-coupled device (CCD) or a complementary metal-oxide semiconductor (CMOS) that generates an image signal from input light, and generate image data through image capture and provide the image data to the processor 1520.

The processor 1520 controls each module of the device 1500 and performs operations necessary for image processing. The processor 1520 may include a plurality of microprocessors (processing circuits) according to its function. As described above, the processor 1520 may detect the nose region as an object for identification of the companion animal (e.g., a dog) and determine whether the corresponding nose region is a frontal image.

In addition, the device 1500 may include a communication module 1530. for communication with an external entity, a memory 1540 for data storage, and a display 1550 for screen output.

The communication module 1530 may transmit or receive data with the external entity through a wired/wireless network. In particular, the communication module 1530 may exchange data for AI-based processing through communication with a server. The memory 1540 may store the image data and information necessary for image processing, and the display 1550. may display an interface (UI) for nose print recognition along with the image being captured. In addition, the device 1500 may include various configurations according to its needs.

According to the present disclosure, the processor 1520 may derive a feature vector indicating sensitivity to each of kernels corresponding to a predefined pattern type for each pixel of the image by applying each of kernels to the image, and extract the feature points representing the contour of the nose from the feature vector. For example, the processor 1520 may derive the feature vector by applying the kernels as shown in FIG. 6 to the image of the nose print, and extract the feature points representing the contour of the nose from the feature vector as shown in FIG. 5.

According to the present disclosure, the processor 1520 may correct the connection relationship and positions of the feature points by comparing a skeleton model generated by connecting the feature points with a nose model of the companion animal. For example, the processor 1520 may compare the skeleton model generated as shown in FIG. 8 with the nose model of the companion animal to correct the connection relationship and the positions of the feature points.

According to the present disclosure, the processor 1520 may form a vertical axis line connecting feature points representing the top and bottom of the nose, and determine whether the face rotates in the yaw direction by comparing a distance between a feature point representing the left end of the nose and the vertical axis line with a distance between a feature point representing the right end of the nose and the vertical axis line. For example, the processor 1520 may form the vertical axis line 1-18 connecting feature points representing the top and bottom of the nose, and compare the distance between the feature point 4 representing the left end of the nose and the vertical axis line 1-18 with the distance between the feature point 24 representing the right end of the nose and the vertical axis line 1-18 to determine whether the face rotates in the yaw direction as shown in FIG. 9.

According to the present disclosure, the processor 1520 may form a horizontal axis line connecting feature points representing the left end and the right end of the nose, and determine whether the face rotates in the pitch direction based on whether a vector representing the directionality of feature points constituting nostril openings of the companion animal is located within a reference range with respect to the horizontal axis. For example, the processor 1520 may form the horizontal axis line 4-24 connecting the feature points representing the left end and the right end of the nose, and determine whether the face rotates in the pitch direction based on whether the vector representing the directionality of the feature points constituting the nostril openings of the companion animal is located within the reference range with respect to the horizontal axis 4-24 as shown in FIG. 10.

According to the present disclosure, the processor 1520 may determine whether the face rotates in the pitch direction based on positions of feature points corresponding to the nostril topmost ends of the companion animal and positions of feature points corresponding to the nostril bottommost ends of the companion animal with respect to positions of feature points corresponding to the openings of the nose. For example, the processor 1520 may determine whether the face rotates in the pitch direction based on the positions of the feature points 8 and 28 corresponding to the nostril topmost ends of the companion animal and the positions of the feature points 12 and 32 corresponding to the nostril bottommost ends of the companion animal with respect to the positions of the feature points 6-5-14-13 and 26-25-34-33 corresponding to the openings of the nose as shown in FIG. 11.

According to the present disclosure, the processor 1520 may determine whether the face has been rotated by comparing an area of the left nostril of the companion animal obtained by connecting feature points constituting the left nostril with an area of the right nostril of the companion animal obtained by connecting feature points constituting the right nostril. For example, the processor 1520 may determine whether the face has been rotated by comparing the area of the left nostril obtained by connecting the feature points 7-8-9-10-11-12-13 constituting the left nostril of the companion animal with the area of the right nostril obtained by connecting the feature points 26-27-28-29-30-31-32-33 constituting the right nostril of the companion animal as shown in FIG. 12.

According to the present disclosure, the processor 1520 may form a vertical axis line connecting feature points representing the top and bottom of the nose, and determine whether the face has been rotated by comparing a distance between a feature point representing the medial end of the left nostril of the companion animal and the vertical axis line with a distance between a feature point representing the medial end of the right nostril of the companion animal and the vertical axis line. For example, the processor 1520 may form the vertical axis line 1-18 connecting the feature points representing the top and bottom of the nose, and determine whether the face has been rotated by comparing the distance between the feature point 10 representing the medial end of the left nostril of the companion animal and the vertical axis line 1-18 with the distance between the feature point 30 representing the medial end of the right nostril of the companion animal and the vertical axis line 1-18 as shown in FIG. 13.

According to the present disclosure, the processor 1520 may form a vertical axis line connecting the feature points representing the top and bottom of the nose among the feature points, and determine that the face of the companion animal is not frontal when the vertical axis line and a nostril region of the companion animal overlap each other. For example, the processor 1520 may form the vertical axis line 1-18 connecting the feature points representing the top and bottom of the nose among the feature points, and determining that the face of the companion animal is not frontal when the vertical axis line 1-18 and the nostril region 6-7-8-9-10-11-12-13 of the companion animal overlap as shown in FIG. 14.

According to the present disclosure, if the processor 1520 may determine that the image including the face of the companion animal is invalid when it is determined that the face of the companion animal is not frontal and, and test the validity of an image of a next frame.

The present embodiment and the accompanying drawings only clearly show part of the technical idea included in the present disclosure, and it will be apparent that modified examples and specific embodiments that may be easily inferred by ordinary skilled in the art within the scope of the technical idea included in the specification and drawings of the present disclosure are all included in the scope of the present disclosure.

Therefore, the spirit of the present disclosure should not be limited to the described embodiments, and the scope of the claims described below as well as all things that are equal or equivalent to the scope of the claims will fall within the scope of the spirit of the present disclosure.

## Claims

1. A method of testing suitability of an image for training or recognizing a nose print of a companion animal, the method comprising:
obtaining an image comprising a face of the companion animal;
extracting a nose region of the companion animal from the image;
extracting feature points representing a contour of the nose from the nose region; and
determining whether the nose region is frontal based on a positional relationship of the feature points.

2. The method of claim 1, wherein the extracting of the feature points comprises:
deriving a feature vector indicating sensitivity to each of kernels corresponding to a predefined pattern type for each pixel of the image by applying each of kernels to the image; and
extracting the feature points representing the contour of the nose from the feature vector.

3. The method of claim 2, further comprising correcting a connection relationship and positions of the feature points by comparing a skeleton model generated by connecting the feature points with a nose model of the companion animal.

4. The method of claim 1, wherein the determining of whether the nose region is frontal comprises:
forming a vertical axis line connecting feature points representing a top and a bottom of the nose; and
determining whether the face rotates in a yaw direction by comparing a distance between a feature point representing a left end of the nose and the vertical axis line with a distance between a feature point representing a right end of the nose and the vertical axis line.

5. The method of claim 1, wherein the determining of whether the nose region is frontal comprises:
forming a horizontal axis line connecting feature points representing a left end and a right end of the nose; and
determining whether the face rotates in a pitch direction based on whether a vector representing a directionality of feature points constituting nostril openings of the companion animal is located within a reference range with respect to the horizontal axis.

6. The method of claim 1, wherein the determining of whether the nose region is frontal comprises determining whether the face rotates in a pitch direction based on positions of feature points corresponding to nostril topmost ends of the companion animal and positions of feature points corresponding to nostril bottommost ends of the companion animal with respect to positions of feature points corresponding to openings of the nose.

7. The method of claim 1, wherein the determining of whether the nose region is frontal comprises determining whether the face has been rotated by comparing an area of a left nostril of the companion animal obtained by connecting feature points constituting the left nostril with an area of a right nostril of the companion animal obtained by connecting feature points constituting the right nostril.

8. The method of claim 1, wherein the determining of whether the nose region is frontal comprises:
forming a vertical axis line connecting feature points representing a top and a bottom of the nose; and
determining whether the face has been rotated by comparing a distance between a feature point representing a medial end of a left nostril of the companion animal and the vertical axis line with a distance between a feature point representing a medial end of a right nostril of the companion animal and the vertical axis line.

9. The method of claim 1, wherein the determining of whether the nose region is frontal comprises:
forming a vertical axis line connecting the feature points representing a top and a bottom of the nose among the feature points; and
determining that the face of the companion animal is not frontal when the vertical axis line and a nostril region of the companion animal overlap each other.

10. The method of claim 1, further comprising:
determining that the image including the face of the companion animal is invalid when it is determined that the face of the companion animal is not frontal and discarding the image; and
testing validity of an image of a next frame.

11. A device for testing suitability of an image for training or recognizing a nose print of a companion animal, the device comprising:
a camera configured to photograph the companion animal and generate an image comprising a face of the companion animal; and
a processor configured to process the image to test the suitability of the image,
wherein the processor is further configured to extract a nose region of the companion animal from the image, extract feature points representing a contour of the nose from the nose region, and determine whether the nose region is frontal based on a positional relationship of the feature points.

12. The device of claim 11, wherein the processor is further configured to:
derive a feature vector indicating sensitivity to each of kernels corresponding to a predefined pattern type for each pixel of the image by applying each of kernels to the image; and
extract the feature points representing the contour of the nose from the feature vector.

13. The device of claim 12, wherein the processor is further configured to correct a connection relationship and positions of the feature points by comparing a skeleton model generated by connecting the feature points with a nose model of the companion animal.

14. The device of claim 11, wherein the processor is further configured to:
form a vertical axis line connecting feature points representing a top and a bottom of the nose; and
determine whether the face rotates in a yaw direction by comparing a distance between a feature point representing a left end of the nose and the vertical axis line with a distance between a feature point representing a right end of the nose and the vertical axis line.

15. The device of claim 11, wherein the processor is further configured to:
form a horizontal axis line connecting feature points representing a left end and a right end of the nose; and
determine whether the face rotates in a pitch direction based on whether a vector representing a directionality of feature points constituting nostril openings of the companion animal is located within a reference range with respect to the horizontal axis.

16. The device of claim 11, wherein the processor is further configured to determine whether the face rotates in a pitch direction based on positions of feature points corresponding to nostril topmost ends of the companion animal and positions of feature points corresponding to nostril bottommost ends of the companion animal with respect to positions of feature points corresponding to openings of the nose.

17. The device of claim 11, wherein the processor is further configured to determine whether the face has been rotated by comparing an area of a left nostril of the companion animal obtained by connecting feature points constituting the left nostril with an area of a right nostril of the companion animal obtained by connecting feature points constituting the right nostril.

18. The device of claim 11, wherein the processor is further configured to:
form a vertical axis line connecting feature points representing a top and a bottom of the nose; and
determine whether the face has been rotated by comparing a distance between a feature point representing a medial end of a left nostril of the companion animal and the vertical axis line with a distance between a feature point representing a medial end of a right nostril of the companion animal and the vertical axis line.

19. The device of claim 11, wherein the processor is further configured to:
form a vertical axis line connecting the feature points representing a top and a bottom of the nose among the feature points; and
determine that the face of the companion animal is not frontal when the vertical axis line and a nostril region of the companion animal overlap each other.

20. The device of claim 11, wherein the processor is further configured to:
determine that the image including the face of the companion animal is invalid when it is determined that the face of the companion animal is not frontal and discard the image; and
test validity of an image of a next frame.
